# EUROPÄISCHE PATENTSCHRIFT

(11) **EP 2 303 662 B1**
(45) Veröffentlichungstag und Bekanntmachung des Hinweises auf die Patenterteilung: **09.11.2011**
(21) Anmeldenummer: 09769041.6
(22) Anmeldetag: 24.03.2009
(51) Int. Cl.: B60W 20/00, B60K 6/48

(54) **VERFAHREN UND VORRICHTUNG ZUM BETREIBEN EINES FAHRZEUGES MIT HYBRIDANTRIEB**
METHOD AND DEVICE FOR OPERATING A VEHICLE HAVING A HYBRID DRIVE
PROCÉDÉ ET DISPOSITIF D'EXPLOITATION D'UN VÉHICULE AVEC ENTRAÎNEMENT HYBRIDE

(30) Priorität: 26.06.2008 DE 102008002691
(43) Veröffentlichungstag der Anmeldung: 06.04.2011
(73) Patentinhaber: Robert Bosch GmbH, 70442 Stuttgart (DE)
(72) Erfinder: KHATCHIKIAN, Peter, 71701 Schwieberdingen (DE); HELLMANN, Manfred, 71706 Hardthof (DE); REBER, Felix, 71636 Ludwigsburg (DE); KLYMENKO, Mykhaylo, 70839 Gerlingen (DE)
(86) Internationale Anmeldenummer: PCT/EP2009/053436
(87) Internationale Veröffentlichungsnummer: WO 2009/156192

(56) Entgegenhaltungen:
- EP-A- 1 177 931
- US-A1- 2007 216 312
- US-A1- 2007 219 045

## Beschreibung

### Stand der Technik

Die Erfindung betrifft ein Verfahren zum Betreiben eines Fahrzeuges mit Hybridantrieb, bei welchem ein erstes und ein zweites Antriebsaggregat gemeinsam oder allein zum Antrieb des Fahrzeuges beitragen, wobei das erste Antriebsaggregat das zweite Antriebsaggregat generatorisch zum Laden eines Energiespeichers antreibt und das erste und das zweite Antriebsaggregat durch ein, ein Moment des ersten Antriebsaggregates übertragendes Antriebsstrangelement trennbar sind sowie eine Vorrichtung zur Durchführung des Verfahrens, vgl. EP-A1177937, US 2007/0216312 A, US 2007/0219045 A.

Es werden verstärkt Fahrzeuge mit Hybridantrieben entwickelt, bei welchen verschiedene Antriebe für eine Antriebsaufgabe genutzt werden. Dabei können die einzelnen Motoren in dem Hybridantrieb unterschiedlich zusammenarbeiten. Sie wirken entweder gleichzeitig oder es wirkt nur eine Antriebseinheit auf das zu bewegende Fahrzeug.

Bei den so genannten Parallelhybriden befindet sich ein elektrischer Antrieb auf der Welle eines Verbrennungsmotors. Um ein rein elektrisches Fahren mit stehendem Verbrennungsmotor zu gewährleisten, wird der elektrische Antrieb durch eine Trennkupplung vom Verbrennungsmotor abgekoppelt. Bei Defekten der Trennkupplung bzw. in der hydraulischen Ansteuerung der Trennkupplung kann das übertragbare Moment deutlich geringer sein als das üblicherweise maximal verfügbare Moment. Dabei wird das Moment des Verbrennungsmotors nicht nur für den Fahrzeugantrieb sondern auch für den generatorischen Betrieb des Elektromotors genutzt, welcher einen Energiespeicher auflädt.

Im Falle eines Defektes der Trennkupplung wird der Energiespeicher weiter in der gewohnten Art aufgeladen, was dazu führen kann, dass kein Moment mehr für den Vortrieb des Fahrzeuges zur Verfügung steht. Das bedeutet, dass sich das Fahrzeug in diesem Fall nicht mehr bewegen lässt.

Es ist bekannt, dass bei einem Fahrzeug mit Hybridantrieb die noch zurücklegbare Wegstrecke des Hybridfahrzeuges bestimmt wird, nachdem festgestellt wurde, dass ein Antriebsaggregat des Hybridantriebes nicht mehr zur Verfügung steht und mit dem verbleibenden, noch funktionstüchtigen Antriebsaggregat weitergefahren werden muss.

### Offenbarung der Erfindung

Die Erfindung is durch die Ausprüche deficient. Der Vorteil der Erfindung besteht darin, dass das Fahrzeug bei einem Defekt der Trennkupplung sich noch weiter bewegen lässt, da der zum Laden des Energiespeichers genutzte Momentenanteil auf ein Minimalmoment abgesenkt wird, während der das Minimalmoment übersteigende Momentenüberschuss des sich bei einem Defekt des Antriebsstrangelementes reduzierten Momentes zur Fortbewegung des Fahrzeuges genutzt wird.

Der Fahrer hat somit die Möglichkeit, das Fahrzeug bei einem Defekt der Trennkupplung, welcher das übertragbare Moment einschränkt, noch eine bestimmte Wegstrecke zu bewegen. Dies erlaubt ihm z.B. einen möglichen Gefahrenbereich zu verlassen, oder eine nahegelegene Werkstatt aufzusuchen.

Um noch einen Momentenanteil für den Vortrieb des Fahrzeuges zur Verfügung zu haben, wird die Aufladung des Energiespeichers auf ein Minimum begrenzt. Dabei wird das Minimalmoment derart eingestellt, dass es dem aktuellen Leistungsbedarf der von dem Energiespeicher versorgten elektrischen Systeme des Fahrzeuges entspricht. Somit erfolgt zwar keine weitere Aufladung der Batterie, eine Entladung dieser wird aber zuverlässig verhindert. Der Ladezustand des Energiespeichers bleibt somit erhalten und es besteht noch genügend Leistung für einen Neustart des als Verbrennungsmotor ausgebildeten ersten Antriebsaggregates.

In einer Ausgestaltung der Erfindung wird das Minimalmoment derart eingestellt, dass es dem aktuellen Leistungsbedarf der von dem Energiespeicher versorgten betriebswichtigen Systeme des Fahrzeuges entspricht, damit das Fahrzeug auch wirklich betriebssicher weiterbewegt werden kann. Zu diesen betriebswichtigen Systemen gehören u.a. elektrische Gas- und Bremssysteme, Lenksystems sowie Anzeigesysteme.

Vorteilhafterweise wird das Minimalmoment durch Abschaltung mindestens eines, von dem Energiespeicher versorgten elektrischen Systems, reduziert. Das gezielte Abschalten betrifft besonders die Komfortsysteme im Fahrzeug, zu welchen z.B. die elektrische Scheibenheizungen, elektrische Klimaanlage und elektrische Sitzheizung gehören. Auf diese Weise steht dem Vortrieb des Fahrzeuges noch mehr Moment und somit Leistung zur Verfügung.

Um für eine begrenzte Zeit dem Fahrzeug ein höheres Moment zur Verfügung stellen zu können, wird die Entladung des Energiespeichers bis zu einem vorgegebenen Wert zugelassen. Dadurch steht dem Antriebstrang ein höheres Moment für die Entfernung des Fahrzeuges aus einem Gefahrenbereich zur Verfügung.

Eine weitere Möglichkeit, das Minimalmoment genau zu berechnen, besteht darin, das reduzierte, noch übertragbare Moment der Trennkupplung je zu einem bestimmten Teil auf das erste und das zweite Antriebsaggregat aufzuteilen. Damit wird sichergestellt, dass genügend Moment für den Vortrieb zur Verfügung steht.

Bei einer anderen Weiterbildung der Erfindung weist eine Vorrichtung zum Betreiben eines Fahrzeuges mit Hybridantrieb, bei welchem ein erstes und ein zweites Antriebsaggregat gemeinsam oder allein zum Antrieb des Fahrzeuges beitragen, wobei das erste Antriebsaggregat das zweite Antriebsaggregat generatorisch zum Laden eines Energiespeichers antreibt und das erste und das zweite Antriebsaggregat durch ein, ein Moment des ersten Antriebsaggregates übertragendes Antriebsstrangelement trennbar sind, Mittel auf, welche den zum Laden des Energiespeichers genutzte Momentenanteil auf ein Minimalmoment absenken und den das Minimalmoment übersteigenden Momentenüberschuss des sich bei einem Defekt des Antriebsstrangelementes reduzierten Momentes zur Fortbewegung des Fahrzeuges nutzen. Mit dieser Vorrichtung wird ein zeitweises Fortbewegen des Fahrzeuges aus dem Gefahrenbereich oder bis zur nächsten Werkstatt gewährleistet.

Die Erfindung lässt zahlreiche Ausführungsformen zu. Eine davon soll anhand der in der Zeichnung dargestellten Figuren näher erläutert werden.

Es zeigt:
- Figur 1:: Prinzipdarstellung eines Parallelhybriden
- Figur 2:: ein Ausführungsbeispiel für das erfindungsgemäße Verfahren

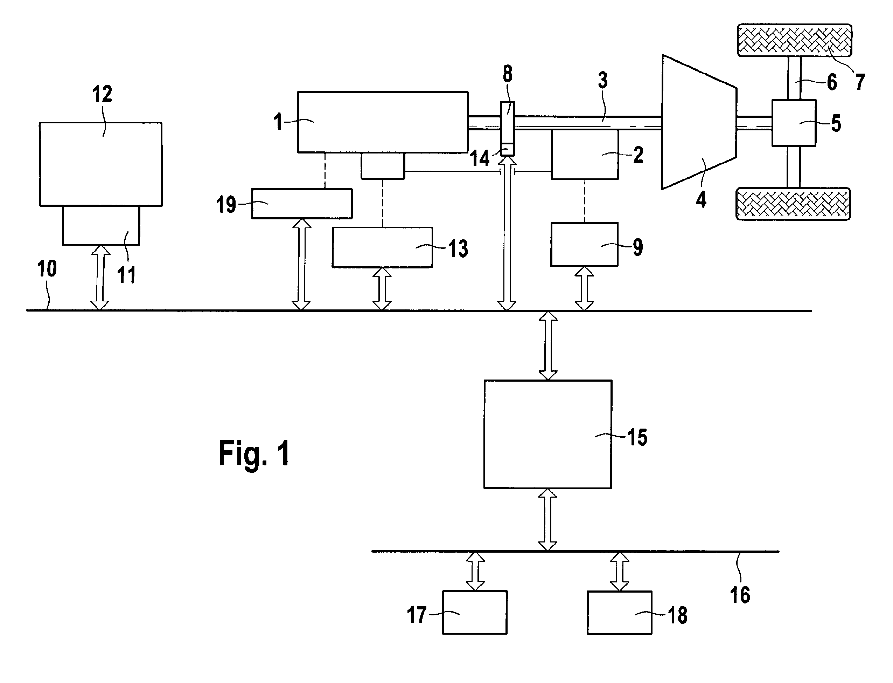

In Figur 1 ist ein Parallelhybridantrieb dargestellt, welcher von einem Verbrennungsmotor 1 als erste Antriebseinheit und einem Elektromotor 2 als zweite Antriebseinheit gebildet ist. Der Elektromotor 2 ist dabei auf der Antriebswelle 3 des Verbrennungsmotors 1 aufgesetzt, welche mit dem Getriebe 4 verbunden ist, welches wiederum über das Differential 5 auf die Radachse 6 zum Antrieb des Rades 7 führt. Der Verbrennungsmotor 1 und der Elektromotor 2 sind über eine Trennkupplung 8, die in der Antriebswelle 3 angeordnet ist, entkoppelbar.

Der Elektromotor 2 verfügt über ein eigenes Elektromotorsteuergerät 9, welches an einen Hybrid CAN-Bus 10 angeschlossen ist, über welchen alle die Steuergeräte miteinander kommunizieren, die Einfluss auf den Hybrid spezifischen Fahrbetrieb des Fahrzeuges haben. Dazu gehören das Batteriemanagementsystem 11 der Batterie 12, ein AC-Kompressor 13 (Wechselstrom-Kompressor) und weitere nicht weiter dargestellte Steuergeräte, die u.a. das Getriebe steuern. Darüber hinaus ist eine Kupplungselektronik 14 ebenfalls mit dem Hybrid CAN-Bus 10 verbunden.

Ein Fahrzeugsteuergerät 15 kommuniziert über den Hybrid CAN Bus 10 mit den daran angeschlossenen Steuergeräten, insbesondere dem Elektromotorsteuergerät 9 und dem Batteriemanagementsystem 11. Darüber hinaus ist es über den CAN Bus 16 mit verschiedenen Steuergeräten verbunden, von welchen nur das Klimasteuergerät 17 und das Steuergerät für die elektrische Bremse 18 dargestellt sind.

Ein Motorsteuergerät 19 des Verbrennungsmotors 1 ist über den Hybrid CAN Bus 10 ebenfalls mit dem Fahrzeugsteuergerät 15 verbunden.

Im Fahrzeugsteuergerät 15 wird das Drehmoment des Vortriebs für das Hybridfahrzeug gesteuert. Zu diesem Zweck wertet das Fahrzeugsteuergerät 15 u.a. die von der Kupplungselektronik 14 gelieferten Daten aus. Dabei wird das für den Vortrieb relevante Drehmoment sowohl vom Verbrennungsmotor 1 als auch vom Elektromotor 2 aufgebracht. Das Fahrzeugsteuergerät 15 arbeitet als Koordinierungseinheit und koordiniert die Beiträge, welche vom Verbrennungsmotor 1 und vom Elektromotor 2 zum Drehmoment geleistet werden.

Von dem Batteriemanagementsystem 11 wird dem Fahrzeugsteuergerät 15 der jeweils aktuelle Ladezustand der Batterie 12 gemeldet. Dabei wird die Batterie 12 aufgeladen, wenn der Elektromotor 2 im generatorischen Betrieb arbeitet, d.h. der Verbrennungsmotor 1 treibt den Elektromotor 2 mechanisch an, welcher darauf hin elektrische Energie produziert, die in der Batterie 12 gespeichert wird. Mit dieser gespeicherten Energie werden einmal die Steuergeräte 15, 17, 18 des Hybridfahrzeuges mit elektrischer Energie versorgt. Andererseits dient diese Energie auch dazu, den Elektromotor 2 anzutreiben, wenn dieser einen Beitrag zum Vortrieb des Fahrzeuges leistet.

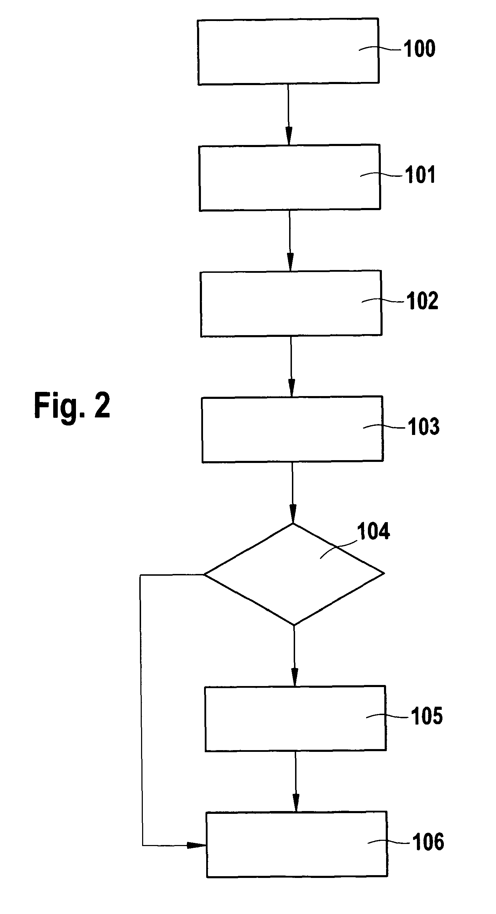

In Figur 2 soll nun der Fall betrachtet werden, dass die Trennkupplung 8 defekt ist und nicht mehr das maximale Moment, welches vom Verbrennungsmotor 1 aufgebracht wird, auf die Antriebswelle 3 übetragen kann. In diesem Fall muss gewährleistet werden, dass das Fahrzeug fahrbereit bleibt, um sich aus einer Gefahrensituation zu bewegen oder zumindest die nächste Werkstatt zu erreichen.

In Block 100 wird durch das Fahrzeugsteuergerät 15 festgestellt, dass die Trennkupplung 14 defekt ist und nur noch ein reduziertes Moment von der Trennkupplung 14 auf die Antriebswelle 3 zum Vortrieb des Fahrzeuges abgegeben werden kann. Daraufhin prüft das Fahrzeugsteuergerät 15 den Ladezustand der Batterie 12 (Block 101). Überschreitet der Ladezustand der Batterie einen vorgegebenen Wert, wird im Block 102 ein Mindestmoment festgelegt, welches dem reduzierten, von der Trennkupplung gelieferten Moment entnommen wird und zur zuverlässigen Versorgung der Steuergeräte 15, 17, 18 des Fahrzeuges dient. Unterschreitet der Ladezustand der Batterie 12 den vorgegebenen Wert, wird im Block 103 das Mindestmoment weiter abgesenkt, so dass nur die für die Betriebssicherheit des Fahrzeuges notwendigen Steuergeräte wie beispielsweise das Steuergerät 18 für die elektronische Bremse weiter betrieben werden. Steuergeräte, welche nur Komfortfunktionen des Fahrzeuges absichern, wie das Klimasteuergerät 17, werden abgeschaltet.

Im Block 104 prüft das Fahrzeugsteuergerät 15, ob der über das Mindestmoment hinausgehende und verbleibende Momentenanteil des reduzierten Momentes für eine Weiterfahrt des Fahrzeuges ausreicht. Ist dies nicht der Fall, wird im Block 105 ein Entladen der Batterie bis zu einem vorgegebenen Betrag ermöglicht, um den Beitrag des verbleibenden Momentenanteiles zu erhöhen, womit das Fahrzeug bis zur nächsten Werkstatt fahren kann.

Reicht das reduzierte Moment zur Weiterfahrt des Fahrzeuges aus, wird vom Block 104 direkt zum Block 106 über gegangen, in welchem der Fahrbetrieb des Fahrzeuges detektiert wird.

Das erfindungsgemäße Verfahren ist nicht nur für die Parallelhybride einsetzbar, sondern für alle hybride Konzepte mit einer Kupplung zwischen dem Verbrennungsmotor und dem Antriebsstrang.

## Patentansprüche

1. Verfahren zum Betreiben eines Fahrzeuges mit Hybridantrieb, bei welchem ein erstes (1) und ein zweites Antriebsaggregat (2) gemeinsam oder allein zum Antrieb des Fahrzeuges beitragen, wobei das erste Antriebsaggregat (1) das zweite Antriebsaggregat (2) generatorisch zum Laden eines Energiespeichers (12) antreibt, wobei das erste (1) und das zweite Antriebsaggregat (2) durch ein, ein Moment des ersten Antriebsaggregates übertragendes Antriebsstrangelement (8) trennbar sind, **dadurch gekennzeichnet, dass** der zum Laden des Energiespeichers (12) genutzte Momentenanteil auf ein Minimalmoment abgesenkt wird, während der, das Minimalmoment übersteigende Momentenüberschuss des sich bei einem Defekt des Antriebsstrangelementes (8) reduzierten Momentes zur Fortbewegung des Fahrzeuges genutzt wird.

2. Verfahren nach Anspruch 1 **dadurch gekennzeichnet, dass** das Minimalmoment derart eingestellt wird, dass es dem aktuellen Leistungsbedarf der von dem Energiespeicher (12) versorgten elektrischen Systeme (15, 17, 18) des Fahrzeuges entspricht.

3. Verfahren nach Anspruch 2 **dadurch gekennzeichnet, dass** das Minimalmoment derart eingestellt wird, dass es dem aktuellen Leistungsbedarf der von dem Energiespeicher (12) versorgten betriebswichtigen Systeme (18) des Fahrzeuges entspricht.

4. Verfahren nach Anspruch 2 **dadurch gekennzeichnet, dass** das Minimalmoment durch Abschaltung mindestens eines, von dem Energiespeicher (12) versorgten elektrischen Systems (17) reduziert wird.

5. Verfahren nach einem der vorhergehenden Ansprüche **dadurch gekennzeichnet, dass** zum Antrieb des Fahrzeuges soviel Energie aus dem Energiespeicher (12) entnommen wird, dass der Energiespeicher (12) bis auf einen vorgegebenen Wert entladen wird.

6. Vorrichtung zum Betreiben eines Fahrzeuges mit Hybridantrieb, bei welchem ein erstes (1) und ein zweites Antriebsaggregat (2) gemeinsam oder allein zum Antrieb des Fahrzeuges beitragen, wobei das erste Antriebsaggregat (1) das zweite Antriebsaggregat (2) generatorisch zum Laden eines Energiespeichers (12) antreibt und das erste (1) und das zweite Antriebsaggregat (2) durch ein, ein Moment des ersten Antriebsaggregates (1) übertragendes Antriebsstrangelement (8) trennbar sind, **dadurch gekennzeichnet, dass** Mittel (15) vorhanden sind, welche den zum Laden des Energiespeichers (12) genutzten Momentenanteil auf ein Minimalmoment absenken und den das Minimalmoment übersteigenden Momentenüberschuss des sich bei einem Defekt des Antriebsstrangelementes (8) reduzierten Momentes zur Fortbewegung des Fahrzeuges nutzen.

7. Vorrichtung nach Anspruch 6 **dadurch gekennzeichnet, dass** das erste Antriebsaggregat (1) als Brennkraftmaschine und das zweite Antriebaggregat (2) als Elektromotor ausgebildet sind.

8. Vorrichtung nach Anspruch 6 **dadurch gekennzeichnet, dass** das Antriebsstrangelement (8) eine Trennkupplung zum Abkoppeln des ersten Antriebaggregates (1) vom zweiten Antriebsaggregat (2) ist.

## Claims

1. Method for operating a vehicle having a hybrid drive, in which a first drive unit (1) and a second drive unit (2) contribute together or solely to driving the vehicle, wherein the first drive unit (1) drives the second drive unit (2) in generator mode in order to charge an energy store (12), wherein the first drive unit (1) and the second drive unit (2) can be disconnected by a drive train element (8) which transmits a torque of the first drive unit (1), **characterized in that** the proportion of torque which is used to charge the energy store (12) is reduced to a minimum torque, while the excess torque, exceeding the minimum torque, of the torque which is reduced in the event of a defect in the drive train element (8) is used to propel the vehicle.

2. Method according to Claim 1, **characterized in that** the minimum torque is set in such a way that it corresponds to the current power demand of the electric systems (15, 17, 18) of the vehicle which are supplied by the energy store (12).

3. Method according to Claim 2, **characterized in that** the minimum torque is set in such a way that it corresponds to the current power demand of the operationally important systems (18) of the vehicle which are supplied by the energy store (12).

4. Method according to Claim 2, **characterized in that** the minimum torque is reduced by switching off at least one electric system (17) which is supplied by the energy store (12).

5. Method according to one of the preceding claims, **characterized in that** in order to drive the vehicle an amount of energy is extracted from the energy store (12) such that the energy store (12) is discharged to a predefined value.

6. Method for operating a vehicle having a hybrid drive, in which a first drive unit (1) and a second drive unit (2) contribute together or solely to driving the vehicle, wherein the first drive unit (1) drives the second drive unit (2) in generator mode in order to charge an energy store (12), and the first drive unit (1) and the second drive unit (2) can be disconnected by a drive train element (8) which transmits a torque of the first drive unit (1), **characterized in that** means (15) are present which reduce the proportion of torque which is used to charge the energy store (12) to a minimum torque and which use the excess torque, exceeding the minimum torque, of the torque which is reduced in the event of a defect in the drive train element (8) to propel the vehicle.

7. Device according to Claim 6, **characterized in that** the first drive unit (1) is embodied as an internal combustion engine and the second drive unit (2) is embodied as an electric motor.

8. Device according to Claim 6, **characterized in that** the drive train element (8) is a clutch for uncoupling the first drive unit (1) from the second drive unit (2).

## Revendications

1. Procédé d'exploitation d'un véhicule équipé d'un entraînement hybride, dans lequel un premier (1) et un deuxième groupe d'entraînement (2) contribuent ensemble ou séparément à l'entraînement du véhicule, le premier groupe d'entraînement (1) entraînant le deuxième groupe d'entraînement (2) à la façon d'un générateur en vue de charger un accumulateur d'énergie (12), le premier (1) et le deuxième groupe d'entraînement (2) pouvant être séparés par un élément de chaîne d'entraînement (8) supportant un moment du premier groupe d'entraînement (1), **caractérisé en ce que** la quotité de moment utilisée pour charger l'accumulateur d'énergie (12) est rabaissée à un moment minimal tandis que l'excédent de moment dépassant le moment minimal du moment réduit est utilisé pour poursuivre le mouvement d'avancée du véhicule en présence d'une panne de l'élément de chaîne d'entraînement (8).

2. Procédé selon la revendication 1, **caractérisé en ce que** le moment minimal est réglé de telle sorte qu'il correspond au besoin de puissance actuel des systèmes électriques (15, 17, 18) du véhicule alimentés par l'accumulateur d'énergie (12).

3. Procédé selon la revendication 2, **caractérisé en ce que** le moment minimal est réglé de telle sorte qu'il correspond au besoin de puissance actuel des systèmes indispensables au fonctionnement (18) du véhicule alimentés par l'accumulateur d'énergie (12).

4. Procédé selon la revendication 2, **caractérisé en ce que** le moment minimal est réduit par déconnexion d'au moins un système électrique (17) alimenté par l'accumulateur d'énergie (12).

5. Procédé selon l'une quelconque des revendications précédentes, **caractérisé en ce que** pour l'entraînement du véhicule, on prend une certaine quantité d'énergie de l'accumulateur d'énergie (12) correspondant à une valeur prédéfinie de déchargement de l'accumulateur d'énergie (12).

6. Dispositif d'exploitation d'un véhicule équipé d'un entraînement hybride, dans lequel un premier (1) et un deuxième groupe d'entraînement (2) contribuent ensemble ou séparément à l'entraînement du véhicule, le premier groupe d'entraînement (1) entraînant le deuxième groupe d'entraînement (2) à la façon d'un générateur en vue de charger un accumulateur d'énergie (12) et le premier (1) et le deuxième groupe d'entraînement (2) pouvant être séparés par un élément de chaîne d'entraînement (8) supportant un moment du premier groupe d'entraînement (1), **caractérisé par** la présence de moyens (15) abaissant la quotité de moment utilisée pour charger l'accumulateur d'énergie (12) à un moment minimal et utilisant l'excédent de moment dépassant le moment minimal du moment réduit en présence d'une panne de l'élément de chaîne d'entraînement (8) pour poursuivre le mouvement d'avancée du véhicule.

7. Dispositif selon la revendication 6, **caractérisé en ce que** le premier groupe d'entraînement (1) prend la forme d'un moteur à combustion interne et que le deuxième groupe d'entraînement (2) prend la forme d'un moteur électrique.

8. Dispositif selon la revendication 6, **caractérisé en ce que** l'élément de chaîne d'entraînement (8) est un élément de débrayage permettant de découpler le premier groupe d'entraînement (1) du deuxième groupe d'entraînement (2) .
